# EUROPEAN PATENT SPECIFICATION

(11) **EP 1 179 898 B1**
(45) Date of publication and mention of the grant of the patent: **06.04.2011**
(21) Application number: 01117416.6
(22) Date of filing: 19.07.2001
(51) Int. Cl.: H04B 7/26

(54) **Point-to-point and point-multipoint radio transmission system, with interoperable TDM and TDMA structure and with different physical modes**
Punkt zu Punkt und Punkt zu Mehrpunkt Funkübertragungsanordnung, mit zusammenarbeitenden TDM und TDMA Strukturen und mit mehreren physischen Moden
Système de transmission radio point vers point et point vers une pluralité de points, avec des structures TDM et TDMA interopérables et des modes physiques différents

(30) Priority: 11.08.2000 IT VA000029
(43) Date of publication of application: 13.02.2002
(73) Proprietor: SIEMENS AKTIENGESELLSCHAFT, 80333 München (DE)
(72) Inventor: Santacesaria, Claudio, 20139 Milano (IT)
(74) Representative: Maier, Daniel Oliver

(56) References cited:
- WO-A-02/41520
- SATER G ET AL: "MEDIA ACCESS CONTROL LAYER PROPOSAL FOR THE 802.16.1 AIR INTERFACE SPECIFICATION" IEEE 802.16.1MC-00/21R1, 7 July 2000 (2000-07-07), pages 1-14, XP002210334

## Description

### FIELD OF THE INVENTION

The present invention finds particular application in point-to-point or point-multipoint radio transmission systems.

In point-multipoint systems it is defined a specific station, called master, the one that communicates with some other stations, called terminals. The classical terminology defines downlink channel, the one going from the master towards the terminals and uplink channel the one in the opposite direction. The two logical channels can occupy separate radio channels (frequency duplex systems) or the same radio channelused in time division (time duplex systems). For convenience, reference shall be made hereafter to frequency duplex systems, but the mention of this type of systems shall not be construed as a limiting one. However, it shall be described how the invention applies also to time duplex systems.

In general, point-to-point systems do not completely take advantage of this invention, even if it is applicable, a priori, also to the same.

### BACKGROUND OF THE INVENTION

In radio transmissions a frame structure is generally defined, which defines how the information is organized in information and control bit sequences. These sequences and the meaning of the different bits inside the sequence, known to the transmitter and the receiver, enable the communication.

Concerning the transmission modes, there are two possibilities:
- continuous transmission or TDM (the transmitter can occupy the transmission channel for long times and the receiver can keep on listening for long times);
- burst transmission or TDMA (the communication from a transmitter to a receiver can occupy only a limited time interval, generally short lasting, inside the channel).

Transmission bursts are absolutely necessary for the uplink channel of time division point - multipoint systems and for time duplex systems, all systems in which the same channel is used by different transmitters in different time instants. In point multipoint frequency duplex systems with adaptive modulation and half duplex terminals (that is terminals that cannot transmit and receive at the same time) a burst transmission can be convenient also in the downlink to enable the (re-)synchronization on the downlink channel of the half duplex terminals after an uplink transmission. In other cases it is preferred to maintain the transmission continuous on the downlink channel defining a frame structure having fixed duration and inserting a synchronization preamble at the beginning of each frame (and therefore periodically on the channel) so that half duplex terminals can (re-)synchronise.

The invention is described with reference to frequency duplex point multipoint systems but it is also applicable to time duplex, and both point-to-point and point-multipoint systems.

The literature offers a plurality of known examples of frame structures for the continuous or burst radio transmission. All the solutions known to the Applicant foresee an a priori choice of a TDM or TDMA mode for the downlink: the TDM enables a more effective use of the spectrum since it is not spoiled, like TDMA, by a plurality of preambles; on the other hand, the TDMA enables a more flexible scheduling of the traffic and a more efficient use of the channel in presence of a majority of half duplex terminals. According to the percentage of half-duplex terminals and to the operating conditions, the TDM or TDMA structure can turn out to be globally more convenient. Moreover, the spectral efficiency, that can be obtained employing different operation modes of the physical layer (modulations and adaptive codes) in the same radio channel in time division, requires a specific support by the frame structure, in order to keep robustness as well as flexibility properties.

From the document of SATER, G et al with the title "Media Access Control Layer Proposal For The 802.16.1 Air Interface Specification" pages 69 to 80 appeared in IEEE 802.16.1 MC-00/21 R1 on July 7, 2000 it is known that on the level of the Medium Access Layer connection-oriented links between a central station and remote stations are set up, whereas the structure of a downlink sub-frame used by the central station to transmit to the remote stations has two optional forms each starting with a Frame Control Header, in which the transmitted information (data) is QAM-4 modulated and contains a preamble used by the Physical Layer for synchronization and equalization.

### OBJECT AND SUMMARY OF THE INVENTION

The present invention offers the advantage to incorporate both the TDM structure and the TDMA one in a unique radio transmission system, assuring interoperability; on the basis of the conditions that make a mode more efficient than another one, the master station can select, automatically or under the operator's control, the most adequate structure and the terminal stations can correctly receive, thanks to this invention, without intervening in any way on the same.

It is thus assured that the system always operates in the best conditions, always assuring the maximum possible efficiency without being compelled to exchange the efficiency of half duplex systems with that of the traditional full duplex terminals a priori, in the design phase, when the percentage of terminals of both the types cannot be known.

Essential element of the invention is the guarantee of interoperability intended in the sense that the switch from a structure to the other one does not require any manual intervention on the terminals. The system enabling to reach this target is the periodic transmission of a preamble, differentiated in the two cases, TDMA and TDM, enabling the terminal to distinguish the correct structure.

The system of the invention enables also, within one of the two TDM and TDMA structures, to support different operation modes of the physical layer (modulations and adaptive codes) and all the typical functions of the shared medium access control protocols (MAC) and data link control protocols (DLC), obtaining considerable advantages in terms of synchronization speed, robustness, efficiency and speed of the protocols themselves.

To attain these objectives, the system of the invention is based on the transmission of clusters (groups) including one or more information units, even non homogeneous in type and/or destination, but sharing the same operation mode of the transmission physical layer (same modulation, same error correction code etc.).

The physical modes can include, for instance, different modulations or different error correction codes. The different modes can have different requirements in terms of signal to noise ratio; for convenience, it is defined hereafter the basic mode as the most robust mode that is the one capable of operating with the minimum signal-noise ratio.

Therefore, the objective of the present invention is a transmission system implemented in compliance with what described in claim 1.

The present invention, together with further advantages, is described in the appended claims relevant to many featuring detail elements. Each one of these elements, highlighted here after and in the claims, involves some advantage on robustness, efficiency or flexibility of the transmission system. Even if the joint use of all these measures enables to obtain the maximum advantages, each of them can be also used as independent measure to obtain some specific advantages.

### BRIEF DESCRIPTION OF DRAWINGS

The invention, together with further objectives and advantages thereof, may be understood from the following detailed description, taken in conjunction with the accompanying drawings, in which:
**Figure 1** shows the general structure of the TDM and TDMA frame;
**Figure 2** shows the detailed structure of the TDM downlink frame;
**Figure 3** shows the detailed structure of the downlink TDMA frame in the preferred embodiment in which the clusters have fixed dimension;
**Figure 4** shows the elementary information unit;
**Figure 5** shows the format of non-periodic control messages;
**Figure 6** shows the detailed structure of the uplink frame;
**Figure 7** shows the application of the invention to a time duplex system (TDD);

### DESCRIPTION OF AN EMBODIMENT OF THE INVENTION

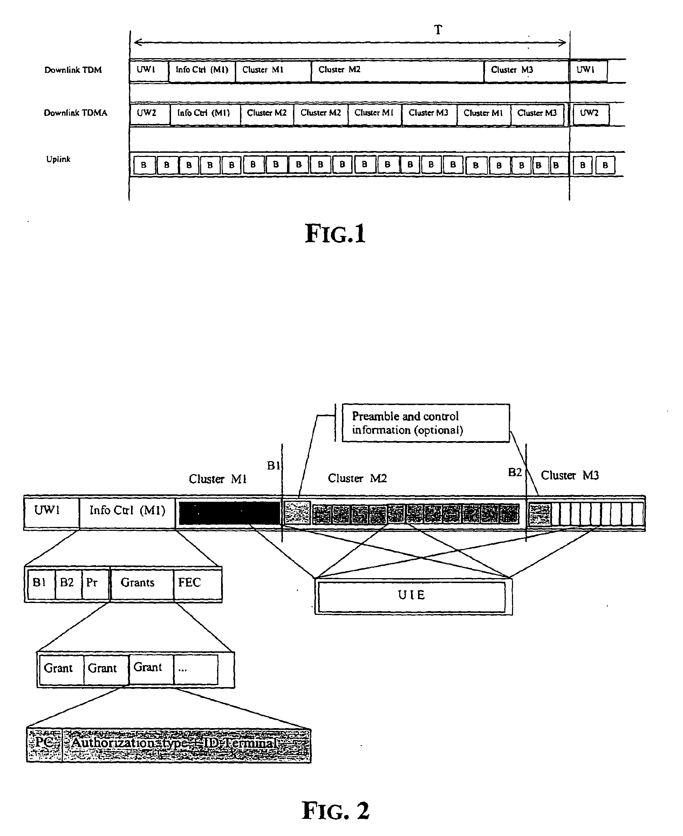

As said above, figure 1 shows, in an FDD scenario, the general structure of the frame (both downlink and uplink) in the TDM mode and in the TDMA one.

All the frames have equal duration, irrespective of the structure (TDM or TDMA) and of the direction (uplink or downlink). The uplink frame is always organized in TDMA and the bursts (B) are separated by guard times; the downlink frame, on the contrary, has a frame preamble (UW1 or UW2) that can be used for the channel synchronization and equalization and that assumes, according to the invention, also the function of identifying if the structure of the above mentioned downlink frame is TDM or TDMA (UW1 and UW2 values identify TDM and TDMA, respectively). The frame can optionally contain, after the frame preamble, a control field (Info Ctrl) transporting control information and transmitted with the basic operation mode of the physical layer, that is the most robust one (M1). Other control information can find place inside the subsequent clusters.

Thereafter, information clusters are present, having different characteristics in TDM and TDMA cases.

Let's analyse in detail the TDM downlink structure.

In the case of TDM structure, the information of the downlink channel is transmitted subsequently, inside the frame, in continuous way.

If different operation modes of the physical layer are employed, data are organized in clusters, employing a different physical mode for each one. This is shown in figure 2.

The different clusters are positioned inside the frame in robustness decreasing orderso that the basic physical mode is at the beginning (M1) and the less robust (M2 and M3) are following, up to the frame end.

The dimensions of the different clusters vary from frame to frame, while keeping constant the total duration of the frame. The boundaries between a cluster and another one can be identified in two ways, which can also coexist:
- pointers, that is information identifying the position of said boundaries can be inserted amidst the information of the control field transmitted right after the frame preamble, taking care of using an error correction code of the repetition type. Repeating the information many times it can be reliably decoded without the typical latency of error correction codes. This is a featuring aspect of the invention since it is the sole way to protect this information without delays in the decoding phase, which would make it unusable. The overhead is not a problem since this information has small dimension.
- insertion of appropriate preambles at the beginning of each cluster. Having the clusters variable dimension, the preambles must necessarily be long, but considering that only a few are transmitted per time unit, also in this case the overhead is not a problem. The preamble of the basic physical mode (M1) can be omitted, since it would result close to the frame preamble.

In the clusters, except for possible said preamble and possible control information, a variable number of elementary information units (UIE) can be inserted, containing information of different type with different destination and scope (example: user data and control information) identified by an opportune header.

For details on the format of user data and control information, reference has to be made to the European Patent Application EP 01112324.7, "Point-to-point and point-multipoint radio transmission system with burst transmission " in the name of the same Applicant, in which transmission formats of the user data and of the control information applicable also in this case are described.

Let's analyse in detail the TDMA downlink structure.

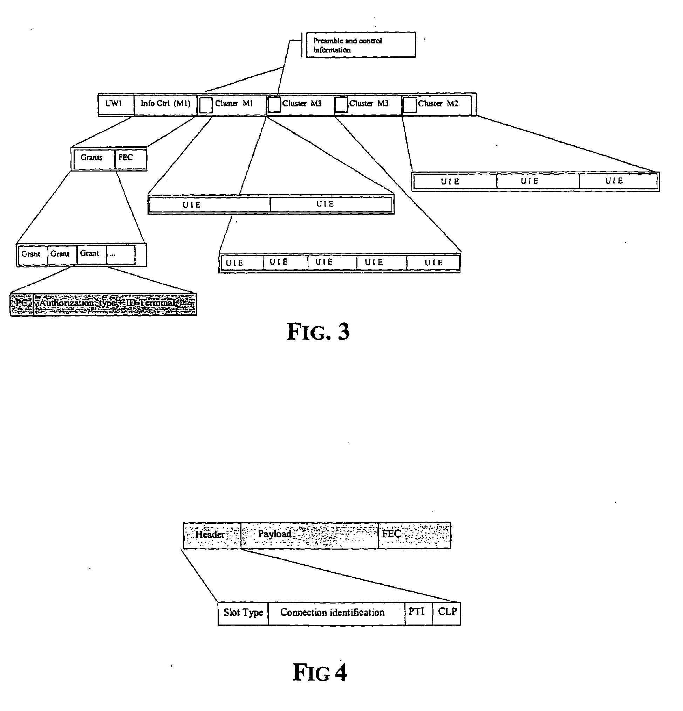

The TDMA downlink frame, described in figure 3, is on the contrary organized in short lasting information clusters, each one preceded by a preamble with synchronization functions. The fact that clusters are short assures a high frequency of preambles and therefore a quick re-synchronization of half-duplex terminals after transmission. Each cluster can operate with a different operation mode of the physical layer.

After the frame preamble and before the first cluster, a control field can be inserted, transmitted with the basic physical mode M1. Other control information can be included in the subsequent clusters; in this case said other control information can be transmitted with the cluster operation mode. In some implementations, a part of said other control information could be introduced in a field having fixed dimension immediately following the cluster preamble and anyhow transmitted with the basic operation mode.

The operation mode of the physical layer of each cluster can be communicated to the receiving station in two ways, which can also coexist:
- a table or map of the employed physical modes is inserted in the downlink frame itself inside the control field immediately after the frame preamble.
   or
- an appropriate and differentiated cluster preamble enables to recognize the cluster physical mode.

The clusters can have fixed or variable duration; according to a preferred embodiment they have fixed duration. In this way, the overhead of the preambles or of the above mentioned maps results limited since the beginning position of each cluster is known in advance to the receiver and shall not be communicated with or obtained from the transmitted information. In case a variable duration is necessary, preambles shall be longer or the map shall have larger dimensions to contain the information on the boundaries between clusters.

A variable number of elementary information units can be inserted in the clusters.

In the case of clusters having fixed duration, the number of useful bits of each cluster shall, of course, depend on the physical mode of the cluster itself (type of modulation and overhead of the code). According to a preferred embodiment the cluster duration is selected in order to contain an integer number, different according to the physical mode, of elementary information units (e.g. 2 UIE for M1, 3 for M2 and 5 for M3). The elementary information unit, shown in figure 4, consists of an header, identifying the type of information and the connection, followed by a payload.

The header field contains the identification of the type of slot, the connection identifier, and other information useful for the segmentation functions of long packets (PTI) and for identification of the priority of the unit itself (CLP).

According to a preferred embodiment, the above mentioned payload has 48 byte constant dimension, but this shall not be construed as a limitation of the invention. The UIE is protected with an error correction code (FEC).

We shall now analyze the structure of some of the control information common to the TDM and TDMA cases on the downstream. There is periodic and non-periodic control information. The non-periodic control information includes for instance the messages for protocols associated to the change of operation mode of the physical layer and of radio channel. In general, the associated protocols are slow and this information is transmitted, when necessary, subtracting time portions to the radio channel otherwise used for the user traffic. If information is destined to more terminals (multicast or broadcast) basic physical mode is used for transmission, otherwise, if it is addressed to a specific terminal, it can alternatively be transmitted with the basic physical mode or with the physical mode of the destination terminal.

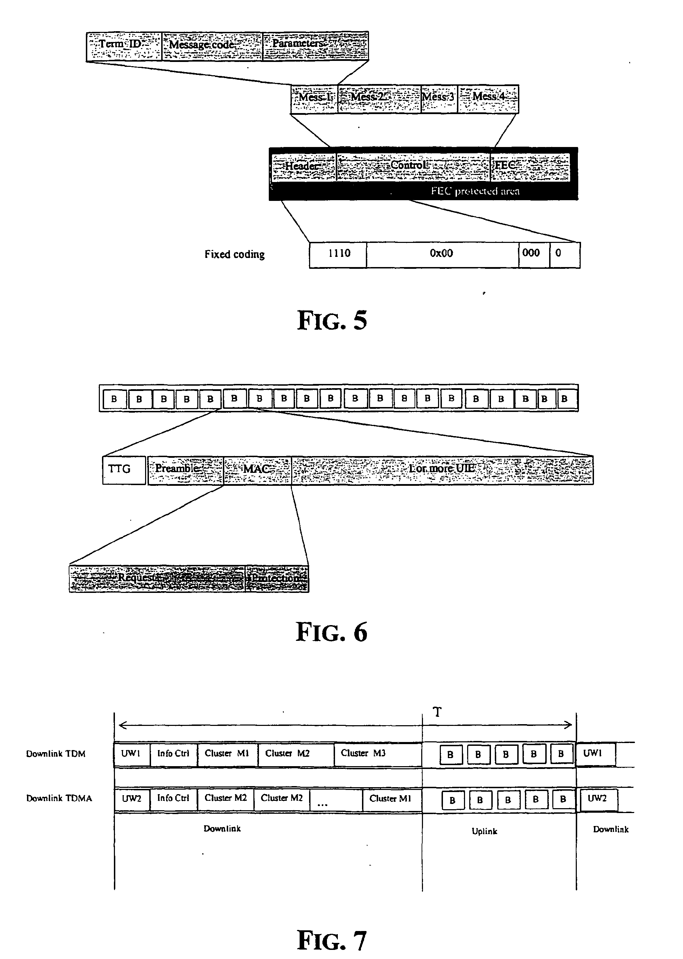

According to a preferred embodiment, it is transmitted with basic physical mode occupying an elementary information unit that is filled with messages as shown in figure 5. The messages have the following format: a terminal identification to which the message is addressed, the operation code of the message and the message parameters. More messages (for the downlink of point-multipoint systems also with different destination terminals) can be condensed in the same control field.

On the contrary, the periodic information requires reserved portions of the channel and includes, on the downlink, the authorizations to use the uplink channel assigned to the different terminals (Grants, visible in figure 2 and in figure 3) and, when necessary, the boundaries between different clusters (B1 and B2 visible in Info Ctrl of figure 2); on the uplink channel it includes the band requests made by the terminals themselves (visible in figure 6). The periodic information generally occupy a predefined position inside the frame: in the TDM frame they find their place in the control field immediately following the frame preamble and are transmitted with the basic physical mode; in the TDMA frame they can occupy the control field immediately following the frame preamble and are transmitted with the basic physical mode or can be inserted in subsequent clusters; in this last case, they are always transmitted at the beginning of the cluster and with the basic physical mode, irrespective of the physical mode of the cluster itself. The control fields are sometimes protected with a traditional error correction code (FEC in figure 2 and figure 3) and sometimes with a different protection, for instance a repetition code, for a quicker decoding (Pr in figure 2 and Protection in figure 6).

The 'grant' field includes different 'grants' each of which can include, among other things, a (PC) field destined to the quick power control information, an 'Authorization field' including the type of authorization and an identification of the terminal invited to transmit; these fields are repeated many times in the downlink frame, once for each burst of the uplink channel of the next frame.

The above-mentioned terminal identification can in some cases (for example authorization to contention) assume the meaning of identification of a group of terminals.

The authorization addresses the terminal and not the connection; the terminal shall have a second level scheduler through which it shall decide which connection to transmit.

The terminals can easily synchronize on the downlink channel and perform uplink transmissions in a well defined time relationship with those of the downlink; during the initial registration phase, the base station equalizes the delays of all the terminals.

The terminals, at the first transmission, do not know the time relationship between the downlink bursts and the uplink bursts. This time relationship depends on the distance of the terminal itself from the base station and is equalized by the master station on the basis of a delay equalization procedure. This procedure requires the transmission of a burst that does not observe the system time relations. For this reason, the master station has the faculty to open a silence time slot on the uplink channel in order to enable this operation.

The positions, in which each terminal is authorized to transmit, are communicated through the above mentioned 'grants'. These messages, belonging to control information, are inserted in the appropriate fields of the downlink frame structure; according to a preferred embodiment they find place among the control information inserted in the control field right after the frame preamble; according to another preferred embodiment, limited to the TDMA structure, they find place inside and at the beginning of each cluster of the downlink frame in the control field that can be inserted immediately after the cluster preamble; this measure enables a more frequent transfer and therefore quicker protocols.

We shall now consider the frame structure of the preferred embodiment for the uplink (figure 6).

Uplink transmissions are organized in bursts; each burst provided with its own preamble is transmitted by a terminal towards the master station and is featured by an operation mode of the physical layer known in advance by the receiving master station. For more robustness and simplicity of demodulation, even if not strictly necessary, according to a preferred embodiment, the burst contains the information of the physical mode inside the preamble. Bursts can have fixed or variable time duration. According to a preferred embodiment they have fixed time duration in order to reduce the overhead of the control information and of the preambles. According to a preferred embodiment, the uplink burst (figure 6) consists of an information field having fixed duration that contains, according to the physical layer operation mode, one or more elementary information units completely equal to that of the downlink (figure 4) that can possibly be used for control information (figure 5), a preamble for the physical layer synchronization, a MAC field containing information for the management of the shared medium access control. Moreover, there is a TTG field (Terminal Transition Gap) which is a silence interval between two bursts, necessary to enable the previous terminal to switch off the transmitter and the new one to switch it on, in addition to absorbing the non perfect equalization of delays. The MAC field of the uplink contains a Request field with its protection. This request carries information about the status of the queues of the terminal transmitting the same. This information, in its simplest form, is binary coded associating a logic state to the non-empty queue state (at least an elementary information unit to be transmitted) and the other logic state to the empty queue state; with a higher number of bits, more states corresponding to different filling states can be coded (for instance, up to *m* information units, up to *n* information units an so on).

According to another preferred embodiment, a FEC field destined to an error correction code can be added at the burst end and replace the FEC of the UIE(s) in order to protect Header and Information Field of the UIE(s) and possibly also the MAC request field, thus making the protection field useless. Through this measure, the complexity of the receiver is increased, but the overhead is decreased, thus improving the system efficiency.

Figure 7 shows the application of the invention in time duplex scenarios. In time duplex systems the downlink and uplink portions alternate inside the same channel instead of occupying radio channels on separate frequencies. All the characteristics of the invention can be trivially applied also in this case.

Therefore, though some particular embodiments of the present invention have been shown and described, it should be understood that the present invention is not limited thereto since other embodiments may be made by those skilled in the art without departing from the scope thereof. It is contemplated that the present invention encompasses any and all such embodiments covered by the following claims.

## Claims

1. Radio transmission system for data organized in frames between a central station or master and one or more terminal or remote stations, the uplink frames, transmitted by each one of said remote stations towards the master station, being organized at their inside according to the TDMA structure, or Time Division Multiple Access structure, and containing more bursts each one transporting one or more elementary information units, **characterized in that**
downlink frames, transmitted by said master station towards said remote stations, are at their inside alternatively organized according to the TDMA structure or according to the TDM structure, or Time Division Multiplex structure, according to a manual setting or automatically decided, on the basis of a given algorithm, by a control unit of the master station;
each one of said downlink frames including a first set of symbols forming a frame preamble identifying the organization structure of the data of the same frame and possibly used also for the synchronization and equalization functions;
each one of said remote stations being equipped with processing means of said downlink frames whose configuration is automatically adapted to the TDMA structure or TDM structure, according to the information contained in said frame preamble.

2. Transmission system according to claim 1, **characterized in that** said frame preamble, being in whole or in part used also for synchronization and equalization functions, can assume two different configurations of symbols identifying a TDM structure or a TDMA structure, respectively.

3. Transmission system according to claim 2, **characterized in that** said downlink frame has an internal organization of the TDM type and includes one or more bit clusters.

4. System according to claim 3, **characterized in that** the bits of the same cluster share a same operation mode of the physical layer or at least a same modulation and a same error correction code.

5. System according to claim 3, **characterized in that** the boundaries between the clusters, transmitted inside the frame, are identified by pointers inserted together with other information in a field of control bits, immediately following said frame preamble.

6. System according to claim 5, **characterized in that** said pointers are protected with a 'repetition' code.

7. System according to claim 3, **characterized in that** the boundaries between clusters transmitted inside the frame are recognized by preamble symbols present between the end of a cluster and the beginning of the next one.

8. System according to claim 4, **characterized in that** clusters are transmitted inside the frame in increasing order of signal to noise ratio requested by said operation mode of the physical layer used to transmit the information units of each cluster.

9. System according to claim 3, **characterized in that** inside each cluster there is a variable number of elementary information units suitable to contain information of different type, destination and scope and so identified by a proper header.

10. System according to claim 9, **characterized in that** the elementary information units include a constant number of bits.

11. System according to claim 4, **characterized in that** the number of clusters inside the frame is just equal to the number of different operation modes of the physical layer employed and each cluster has a different mode.

12. Transmission system according to claim 2, **characterized in that** said downlink frame has an internal organization of data of the TDMA type and includes more bit clusters;
at least the clusters after the first one contain preamble symbols, called cluster preamble, with synchronization functions.

13. Transmission system according to claim 12, **characterized in that** a field of control bits is inserted immediately after the frame preamble.

14. Transmission system according to claim 12, **characterized in that** each cluster is **characterized by** a particular operation mode of the physical layer, that is at least by a modulation and an error correction code, the operation mode through which all the bits of the cluster are transmitted with the possible exception of the control field that can optionally be added right after said cluster preamble and that can be alternatively transmitted always with the basic mode of the physical layer.

15. Transmission system according to claims 13 and 14, **characterized in that** the operation mode of the transmission physical layer of each cluster is communicated to the remote station through a table of the physical modes used for the same downlink frame inserted in said control field immediately following the frame preamble.

16. System according to claim 14, **characterized in that** the operation mode of the transmission physical layer of each cluster is communicated to the remote station through an information contained in said cluster preamble.

17. System according to claim 12, **characterized in that** within each cluster there is a variable number of elementary information units suitable to contain information of different type, destination and scope and so identified by a proper header.

18. System according to claim 17, **characterized in that** the elementary information units include a constant number of bits.

19. Transmission system according to claim 12, **characterized in that** said clusters have all the same time duration and contain an integer number of elementary information units variable according to the physical layer operation mode.

20. System according to claim 1, **characterized in that** each uplink frame consists of a plurality of bursts, each burst including
a first field being a silence interval between subsequent bursts having duration sufficient to the remote station, previously engaging the transmission channel, to switch off the transmitter and to the currently authorized station to switch it on;
a second field being a preamble containing synchronization symbols of the physical layer;
a third field containing control information related to the shared medium access control and an information field, having fixed duration, containing, according to the physical layer operation mode, one or more of said elementary information units.

21. System according to claim 20, **characterized in that** said synchronization preamble, is differentiated adopting different symbol sequences corresponding to the different operation modes of the physical layer.

22. System according to claim 20, **characterized in that** said bursts have constant duration.

23. System according to claim 20, **characterized in that** said control information related to the shared medium access control includes an information called 'request' containing information on the status of the queues or on the band requirements of the remote station.

24. System according to claim 23, **characterized in that** said information on the status of the queues is binary coded with a bit for each controlled queue, and said bit indicates with a value the empty status and with the other one the non-empty status.

25. System according to claim 23, **characterized in that** said information on the status of the queues is coded with more bits for each controlled queue; said additional bits indicating with each coding that the filling status of the queue exceeds a given threshold.

## Patentansprüche

1. Funkübertragungssystem für in Rahmen organisierte Daten zwischen einer zentralen oder Hauptstation und einem oder mehreren Endgeräten oder entfernt gelegenen Stationen, wobei die Aufwärtsrahmen, die von jeder der entfernt gelegenen Stationen zur Hauptstation übertragen werden, in ihrem Inneren der TDMA-Struktur (Time Division Multiple Access, Zeitmultiplex-Vielfachzugriff) entsprechend organisiert sind und mehrere Bündel enthalten, die jeweils eine oder mehrere elementare Informationseinheiten transportieren, **dadurch gekennzeichnet, dass**
Abwärtsrahmen, die von der Hauptstation zu den entfernt gelegenen Stationen übertragen werden, in ihrem Inneren entweder gemäß der TDMA-Struktur oder gemäß der TDM-Struktur (Zeitmultiplexstruktur) organisiert sind, was manuell eingestellt oder auf der Grundlage eines gegebenen Algorithmus von einer Steuereinheit der Hauptstation automatisch festgelegt werden kann,
jeder der Abwärtsrahmen einen ersten Satz Symbole enthält, die einen Rahmenvorspann bilden, der die Organisationsstruktur der Daten des jeweiligen Rahmens angibt und möglicherweise auch für die Synchronisierungs- und Entzerrungsfunktionen benutzt wird,
jede der entfernt gelegenen Stationen mit Verarbeitungsmitteln für die Abwärtsrahmen ausgestattet ist, deren Konfiguration den in dem Rahmenvorspann enthaltenen Informationen entsprechend automatisch an die TDMA- oder TDM-Struktur angepasst wird.

2. Übertragungssystem nach Anspruch 1, **dadurch gekennzeichnet, dass** der Rahmenvorspann, der insgesamt oder teilweise auch für Synchronisierungs- und Entzerrungsfunktionen benutzt wird, zwei verschiedene Konfigurationen von Symbolen annehmen kann, die eine TDM-Struktur beziehungsweise eine TDMA-Struktur angeben.

3. Übertragungssystem nach Anspruch 2, **dadurch gekennzeichnet, dass** der Abwärtsrahmen eine interne Organisation vom TDM-Typ aufweist und einen oder mehrere Bitcluster enthält.

4. System nach Anspruch 3, **dadurch gekennzeichnet, dass** Bits im selben Cluster den gleichen Betriebsmodus der Bitübertragungsschicht oder zumindest die gleiche Modulation und den gleichen Fehlerkorrekturmodus aufweisen.

5. System nach Anspruch 3, **dadurch gekennzeichnet, dass** die Grenzen zwischen den Clustern, die im Rahmen übertragen werden, durch Zeiger angegeben werden, die zusammen mit weiteren Informationen in ein Feld von Steuerbits eingefügt werden, das unmittelbar auf den Rahmenvorspann folgt.

6. System nach Anspruch 5, **dadurch gekennzeichnet, dass** die Zeiger von einem "Wiederholungscode" geschützt werden.

7. System nach Anspruch 3, **dadurch gekennzeichnet, dass** die Grenzen zwischen in dem Rahmen übertragenen Clustern durch Vorspannsymbole erkannt werden, die sich zwischen dem Ende des einen Clusters und dem Anfang des nächsten befinden.

8. System nach Anspruch 4, **dadurch gekennzeichnet, dass** Cluster in dem Rahmen nach steigendem Maß des Signal-Rausch-Verhältnisses übertragen werden, das von dem Betriebsmodus der Bitübertragungsschicht gefordert wird, der zum Übertragen der Informationseinheiten des jeweiligen Clusters benutzt wird.

9. System nach Anspruch 3, **dadurch gekennzeichnet, dass** sich in jedem Cluster eine variable Anzahl elementarer Informationseinheiten befindet, die Informationen unterschiedlichen Typs, Zielorts und Umfangs enthalten können und durch einen ordnungsgemäßen Kopfteil identifiziert werden.

10. System nach Anspruch 9, **dadurch gekennzeichnet, dass** die elementaren Informationseinheiten eine konstante Anzahl Bits enthalten.

11. System nach Anspruch 4, **dadurch gekennzeichnet, dass** die Anzahl Cluster im Rahmen genau der Anzahl verschiedener Betriebsmodi der eingesetzten Bitübertragungsschicht entspricht und jeder Cluster einen anderen Modus aufweist.

12. Übertragungssystem nach Anspruch 2, **dadurch gekennzeichnet, dass** der Abwärtsrahmen eine interne Datenorganisation vom TDMA-Typ aufweist und mehrere Bitcluster enthält,
zumindest die auf den ersten Cluster folgenden Cluster als Cluster-Vorspann bezeichnete Vorspannsymbole mit Synchronisierungsfunktionen enthalten.

13. Übertragungssystem nach Anspruch 12, **dadurch gekennzeichnet, dass** unmittelbar nach dem Rahmenvorspann ein Feld aus Steuerbits eingefügt wird.

14. Übertragungssystem nach Anspruch 12, **dadurch gekennzeichnet, dass** jeder Cluster durch einen bestimmten Betriebsmodus der Bitübertragungsschicht **gekennzeichnet** ist, das heißt zumindest durch eine Modulation und einen Fehlerkorrekturcode, wobei über den Betriebsmodus - möglicherweise abgesehen vom Steuerfeld, das wahlweise direkt nach dem Cluster-Vorspann hinzugefügt und alternativ stets mit dem Grundmodus der Bitübertragungsschicht übertragen werden kann - alle Bits des Clusters übertragen werden.

15. Übertragungssystem nach den Ansprüchen 13 und 14, **dadurch gekennzeichnet, dass** die Betriebsmodi der Bitübertragungsschicht der einzelnen Cluster der entfernt gelegenen Station über eine in das unmittelbar auf den Rahmenvorspann folgende Steuerfeld eingefügte Tabelle mit den physikalischen Modi mitgeteilt werden, die für den betreffenden Abwärtsrahmen benutzt wurden.

16. System nach Anspruch 14, **dadurch gekennzeichnet, dass** die Betriebsmodi der Bitübertragungsschicht der einzelnen Cluster der entfernt gelegenen Station über eine in dem Cluster-Vorspann enthaltene Information mitgeteilt werden.

17. System nach Anspruch 12, **dadurch gekennzeichnet, dass** sich in jedem Cluster eine variable Anzahl elementarer Informationseinheiten befindet, die Informationen unterschiedlichen Typs, Zielorts und Umfangs enthalten können und durch einen ordnungsgemäßen Kopfteil identifiziert werden.

18. System nach Anspruch 17, **dadurch gekennzeichnet, dass** die elementaren Informationseinheiten eine konstante Anzahl Bits enthalten.

19. Übertragungssystem nach Anspruch 12, **dadurch gekennzeichnet, dass** die Cluster alle die gleiche Dauer aufweisen und eine ganzzahlige Anzahl elementarer Informationseinheiten enthalten, die dem Betriebsmodus der Bitübertragungsschicht entsprechend variieren kann.

20. System nach Anspruch 1, **dadurch gekennzeichnet, dass** jeder Aufwärtsrahmen aus mehreren Bündeln besteht, die jeweils Folgendes aufweisen:
ein erstes Feld, bei dem es sich um ein Pausenintervall zwischen aufeinanderfolgenden Bündeln handelt, das von ausreichender Dauer ist, damit die entfernt gelegene Station, die bisher den Übertragungskanal belegt hat, den Sender ausschaltet und die derzeit autorisierte Station den Sender einschaltet,
ein zweites Feld, bei dem es sich um einen Vorspann handelt, der Synchronisiersymbole der Bitübertragungsschicht enthält,
ein drittes Feld, das die gemeinsame Medienzugangssteuerung betreffende Steuerinformationen und ein Informationsfeld enthält, welches von fester Dauer ist und dem Betriebsmodus der Bitübertragungsschicht entsprechend eine oder mehrere elementare Informationseinheiten enthält.

21. System nach Anspruch 20, **dadurch gekennzeichnet, dass** die Synchronisiervorspanne unter Verwendung unterschiedlicher Symbolfolgen je nach Betriebsmodus der Bitübertragungsschicht voneinander unterschieden werden.

22. System nach Anspruch 20, **dadurch gekennzeichnet, dass** die Bündel eine konstante Dauer aufweisen.

23. System nach Anspruch 20, **dadurch gekennzeichnet, dass** die Steuerinformationen bezüglich der gemeinsamen Medienzugangssteuerung eine als "Anfrage" bezeichnete Information enthalten, die Informationen zum Status der Warteschlangen oder zu den Frequenzbandanforderungen der entfernt gelegenen Station enthält.

24. System nach Anspruch 23, **dadurch gekennzeichnet, dass** die Informationen zum Status der Warteschlangen binärcodiert sind, wobei es ein Bit für jede gesteuerte Warteschlange gibt und das Bit mit einem Wert den Leer-Status und mit dem anderen Wert den Nicht-leer-Status angibt.

25. System nach Anspruch 23, **dadurch gekennzeichnet, dass** die Informationen zum Status der Warteschlangen mit mehreren Bits für jede gesteuerte Warteschlange codiert werden, wobei die zusätzlichen Bits in jeder Codierung angeben, dass der Füllstatus der Warteschlange einen gegebenen Schwellwert übersteigt.

## Revendications

1. Système de transmission radio pour des données organisées en trames entre une station centrale ou maître et un ou plusieurs terminaux ou stations distantes, les trames montantes, émises par chacune desdites stations distantes vers la station maître, ayant une organisation intérieure répondant à la structure TDMA, ou structure d'accès multiple à répartition dans le temps, et contenant plusieurs rafales dont chacune transporte une ou plusieurs unités d'information élémentaire, **caractérisé en ce que**
les trames descendantes, émises par ladite station maître vers lesdites stations distantes, ont une organisation intérieure répondant alternativement à la structure TDMA ou à la structure TDM, ou structure de multiplexage par répartition dans le temps, en fonction d'un réglage manuel ou décidé automatiquement, sur la base d'un algorithme donné, par une unité de commande de la station maître ; chacune desdites trames descendantes incluant un premier ensemble de symboles formant un préambule de trame identifiant la structure d'organisation des données de la même trame et utilisé également, le cas échéant, pour les fonctions de synchronisation et d'égalisation ;
chacune desdites stations distantes étant équipée d'un moyen de traitement desdites trames descendantes dont la configuration est automatiquement adaptée à la structure TDMA ou à la structure TDM, en fonction des informations contenues dans ledit préambule de trame.

2. Système de transmission selon la revendication 1, **caractérisé en ce que** ledit préambule de trame, utilisé également, en totalité ou en partie, pour des fonctions de synchronisation et d'égalisation, peut prendre deux configurations différentes de symboles identifiant, respectivement, une structure TDM ou une structure TDMA.

3. Système de transmission selon la revendication 2, **caractérisé en ce que** ladite trame descendante a une organisation interne du type TDM et inclut un ou plusieurs groupes de bits.

4. Système selon la revendication 3, **caractérisé en ce que** les bits du même groupe partagent un même mode de fonctionnement de la couche physique ou au moins une même modulation et un même code de correction d'erreur.

5. Système selon la revendication 3, **caractérisé en ce que** les limites entre les groupes transmis à l'intérieur de la trame sont identifiées par des pointeurs insérés avec d'autres informations dans un champ de bits de contrôle, immédiatement derrière ledit préambule de trame.

6. Système selon la revendication 5, **caractérisé en ce que** lesdits pointeurs sont protégés par un code de "répétition".

7. Système selon la revendication 3, **caractérisé en ce que** les limites entre les groupes transmis à l'intérieur de la trame sont reconnues grâce à des symboles de préambule présents entre la fin d'un groupe et le début du groupe suivant.

8. Système selon la revendication 4, **caractérisé en ce que** les groupes sont transmis à l'intérieur de la trame dans l'ordre croissant du rapport signal/bruit requis par ledit mode de fonctionnement de la couche physique utilisé pour transmettre les unités d'information de chaque groupe.

9. Système selon la revendication 3, **caractérisé en ce qu'**il y a, à l'intérieur de chaque groupe, un nombre variable d'unités d'information élémentaire adapté pour contenir des informations de différents types, avec des destinations et des portées différentes, qui sont donc identifiées par un en-tête qui leur est propre.

10. Système selon la revendication 9, **caractérisé en ce que** les unités d'information élémentaire incluent un nombre de bits constant.

11. Système selon la revendication 4, **caractérisé en ce que** le nombre de groupes à l'intérieur de la trame est exactement égal au nombre de modes de fonctionnement différents de la couche physique utilisée et chaque groupe a un mode différent.

12. Système de transmission selon la revendication 2, **caractérisé en ce que** ladite trame descendante a une organisation interne de données du type TDMA et comprend plus de groupes de bits ;
au moins les groupes venant après le premier contiennent des symboles de préambule, appelés "préambule de groupe", avec des fonctions de synchronisation.

13. Système de transmission selon la revendication 12, **caractérisé en ce qu'**un champ de bits de contrôle est inséré immédiatement après le préambule de trame.

14. Système de transmission selon la revendication 12, **caractérisé en ce que** chaque groupe est **caractérisé par** un mode de fonctionnement particulier de la couche physique, c'est-à-dire au moins par une modulation et un code de correction d'erreur, le mode de fonctionnement par lequel tous les bits du groupe sont transmis, à l'exception possible du champ de contrôle qui peut, facultativement, être ajouté juste après ledit préambule de groupe et qui peut être toujours transmis, de manière alternative, avec le mode de base de la couche physique.

15. Système de transmission selon les revendications 13 et 14, **caractérisé en ce que** le mode de fonctionnement de la couche physique de transmission de chaque groupe est communiqué à la station distante par le biais d'une table des modes de physique utilisés pour la même trame descendante, insérée dans ledit champ de contrôle venant immédiatement après le préambule de trame.

16. Système selon la revendication 14, **caractérisé en ce que** le mode de fonctionnement de la couche physique de transmission de chaque groupe est communiqué à la station distante par le biais d'une information contenue dans ledit préambule de trame.

17. Système selon la revendication 12, **caractérisé en ce qu'**il y a, à l'intérieur de chaque groupe, un nombre variable d'unités d'information élémentaire adapté pour contenir des informations de différents types, avec des destinations et des portées différentes, qui sont donc identifiées par un en-tête qui leur est propre.

18. Système selon la revendication 17, **caractérisé en ce que** les unités d'information élémentaire incluent un nombre de bits constant.

19. Système de transmission selon la revendication 12, **caractérisé en ce que** lesdits groupes ont tous la même durée dans le temps et contiennent un nombre entier d'unités d'information élémentaire variable en fonction du mode de fonctionnement de la couche physique.

20. Système selon la revendication 1, **caractérisé en ce que** chaque trame montante consiste en une pluralité de rafales, chaque rafale incluant
un premier champ qui est un intervalle de silence entre des rafales subséquentes ayant une durée suffisante pour que la station distante ayant emprunté auparavant le canal de transmission éteigne l'émetteur et pour que la station actuellement autorisée l'allume ;
un deuxième champ qui est un préambule contenant des symboles de synchronisation de la couche physique ;
un troisième champ contenant des informations de contrôle relatives au contrôle d'accès au médium partagé et un champ d'information, de durée fixe, contenant, en fonction du mode de fonctionnement de la couche physique, une ou plusieurs desdites unités d'information élémentaire.

21. Système selon la revendication 20, **caractérisé en ce que** ledit préambule de synchronisation est différencié, adoptant différentes séquences de symboles correspondant aux différents modes de fonctionnement de la couche physique.

22. Système selon la revendication 20, **caractérisé en ce que** lesdites rafales sont de durée constante.

23. Système selon la revendication 20, **caractérisé en ce que** lesdites informations de contrôle relatives au contrôle d'accès au médium partagé comprennent une information appelée "requête" contenant une information sur l'état des files d'attente ou sur les exigences de bande de la station distante.

24. Système selon la revendication 23, **caractérisé en ce que** lesdites informations sur l'état des files d'attente font l'objet d'un codage binaire, avec un bit pour chaque file d'attente contrôlée, et ledit bit indique l'état "vide" avec une valeur et l'état "non vide" avec l'autre valeur.

25. Système selon la revendication 23, **caractérisé en ce que** lesdites informations sur l'état des files d'attente sont codées avec plusieurs bits pour chaque file d'attente contrôlée ; lesdits bits supplémentaires indiquant, avec chaque codage, que l'état de remplissage de la file d'attente dépasse un seuil donné.
